# EUROPEAN PATENT SPECIFICATION

(11) **EP 2 863 702 B1**
(45) Date of publication and mention of the grant of the patent: **06.03.2019**
(21) Application number: 13189370.3
(22) Date of filing: 18.10.2013
(51) Int. Cl.: H04W 76/18, H04W 48/18

(54) **USE OF MOBILE ORIGINATING CIRCUIT-SWITCHED (MO-CS) SIGNALLING**
VERWENDUNG VON MOBILE ORIGINATING CIRCUIT-SWITCHED (MO-CS) SIGNALISIERUNG
UTILISATION DE SIGNALISATION MOBILE ORIGINATING CIRCUIT-SWITCHED (MO-CS)

(43) Date of publication of application: 22.04.2015
(73) Proprietor: Vodafone GmbH, 40549 Düsseldorf (DE)
(72) Inventor: Lu, Yang, 40489 Düsseldorf (DE); Caldenhoven, Jürgen, 40547 Düsseldorf (DE); Wild, Peter, 47807 Krefeld (DE); Rodermund, Friedhelm, 56077 Koblenz (DE)
(74) Representative: Müller & Schubert

(56) References cited:
- WO-A1-2013/142277

## Description

The present invention relates to a method of handling communication in a communication network for communication via circuit-switched (CS) domain and packet-switched (PS) domain of the communication network. Furthermore, a mobile terminal of a communication network for communication via circuit-switched (CS) domain and packet-switched (PS) domain of the communication network is described.

With the new deployment of the LTE/EPC which provides only pure packet switched (PS) domain access, the increasing use of the smartphones and rapidly expanding of the machine type communications with million numbers of devices, which will hereinafter also be referred to as mobile terminals, it may be reasonable to assume that in the near future the PS domain of a mobile communication network will be often getting congested. To cope with this, solutions have been found and specified in 3GPP in such a way that the PS domain network, that means the PGW, SGW and MME/HSS can decide based on the congestion situation and the PS network capacity to back off the devices, when they attempt to get the PS service via LTE/EPC. This is done by providing a randomly selected back-off timer to the device and hence the device will only be permitted to access the PS network after this back-off timer expires (c.f. 3GPP TS23.401 subclauses 4.3.7.4.2 and 4.3.7.5). Additionally, it is specified that the device, which is already backed off in the PS domain, is permitted to select the GSM and UMTS circuit switched (CS) domain in order to initiate CS services such as voice call, video call, location-based-services, USSD or SMS service. The concerns about allowing the devices to uncontrolled select the CS domain are that this would likely cause a domino effect and worsen the already serious network capacity problem for instance with the HSS. On the other hand, if the devices are completely disallowed, then consumers will not be able to get the legacy CS services and the operators could lose revenues.

WO 2013 / 142277 A1 discloses the handling of services during device back off. In particular, this document discloses an example method which involves maintaining a device backed off from a packet-switched domain, and when the device is backed off from the packet-switched domain, sending a request to attach the device to an access network in a circuit-switched domain. In some examples allowed service information is sent from the PS domain with the PS back off timer value, when the PS domain sends a MM service reject message to reject a request to access a service through the PS domain. The allowed service information may be implemented using an information element (IE) field in a MM service reject message.

The problem to be solved by the present invention is thus to provide a solution for addressing unavailability, in particular congestion of a packet-switched domain of a communication network without causing dissatisfaction of the user and without compromising the performance of a circuit-switched domain of the communication network.

The invention is based on the finding that this problem can be solved by providing instructions to the mobile terminals of the communication network for usage in case of unavailability, in particular congestion of the packet-switched (PS) network.

The invention is defined in the independent claims. Additional features of the invention are provided in the dependent claims. The embodiments and/or examples disclosed in the following description which are not covered by the appended claims are considered as not being part of the present invention.

A mobile terminal (UE) of a communication network for communication via circuit-switched (CS) domain (CS-domain) and packet-switched (PS) domain (PS-domain) of the communication network may be used, where at least one information element (IE) is provided to the mobile terminal (UE), which comprises instructions on usage of Mobile Originating circuit-switched (MO-CS) services (MO-CS services) in case of unavailability of the packet-switched (PS) network (PS-network). The information element (IE) is included in an Accept message from the mobility management entity (MME), namely an Attach Accept message or a Tracking Area Update message of the initial attach or tracking area update procedure of the UE at the packet switched (PS) network, and is stored at the mobile terminal (UE)

A mobile terminal which may be used in the present invention is a User Equipment and is hereinafter also referred to as a device or UE. The mobile terminal is in particular a user equipment capable of communicating via a communication network, in particular a mobile communication network. In a preferred embodiment, the mobile terminal is a mobile phone, a smartphone, a tablet PC, a laptop or a machine-to-machine (M2M) device.

The communication network of which the UE is part of, according to the present invention is a communication network for communication via circuit-switched (CS) domain (CS-domain) and packet-switched (PS) domain (PS-domain). The circuit-switched (CS) domain will hereinafter also be referred to as CS-domain and the packet-switched (PS) domain will hereinafter also be referred to as PS-domain. The communication network according to the invention is preferably an Evolved Packet System (EPS) network. The radio access network is preferably an evolved radio access network (eRAN) such as Long Term Evolution (LTE) network and the core network is preferably an evolved packet core (EPC). The communication network comprises a CS domain and a PS domain. The network on which the PS domain is based comprises an eRAN as well as the EPC. The network on which the CS domain is based comprises a 2G/3G network.

The UE according which is used in the present invention is in general capable of communicating via either the CS-domain or the PS-domain of the communication network. For this purpose communication capabilities for the CS-domain and the PS-domain are provided on the UE. These capabilities can be prioritized and/or may be disabled at the UE.

On the mobile terminal (UE) at least one information element (IE) is provided on the mobile terminal (UE).

An information element according to the present invention comprises a set of data and the structure of the data. In particular, the IE may comprise entries, preferably as Bits, fields, nodes and resources. The data may comprise Bits encoded as values as well as service indicia.

The IE is provided on the UE. This means that the IE is stored at or at least accessible from the UE.

The IE comprises instructions on usage of Mobile Originating circuit-switched (MO-CS) services (MO-CS services). Mobile Originating circuit-switched services are services to be initiated from the UE.

The usage of MO-CS services is defined at the IE for the case of unavailability, in particular congestion, of the packet-switched (PS) network (PS-network). That means that the IE defines which instructions with respect to a MO-CS service are to be followed in case of unavailability, in particular congestion, of the PS network. The information in the IE is hence control information. Unavailability of the PS network relates to an overload of at least on entity of the PS network or of the connection to at least one entity of the PS network. These cases are also referred to as congestion of the PS network. In addition, unavailability relates to lack of connection to at least one entity of the PS network.

By providing instructions on CS services which may be used in case of unavailability of the PS network at the mobile terminal (UE), a number of advantages can be achieved. On the one hand, as the CS services are mobile originating services, providing the control information which service may be used at the mobile terminal UE allows for a fast and reliable initiation of the respective services. Thereby, the user experience is improved. In addition, as the MO-CS services and the instructions relating to these services are preset, the congestion of the CS domain can be avoided. With the present invention it will in particular be possible for the network operator of the communication network to dictate the UE with respect to initiating CS services instead of allowing the UE to act freely when the PS network is congested.

The instructions for usage of MO-CS services are preferably permitting to use or not permitting to use at least one Mobile Originating circuit-switched (MO-CS) service. By setting the instructions in the IE in such a way any attempt of a UE to initiate a MO-CS service will be controlled by the IE. In particular, for example only MO-CS services, for which sufficient resources are available in the CS domain may be permitted. Thereby the user experience is further improved. Rather than the UE attempting to start a service which may then due to lack of resources in the CS domain fail or perform poorly, the respective service will not be started, if it is marked in the IE as not permitted. The user may be informed accordingly and may take appropriate measures such as change of network.

According to one embodiment the information element (IE) comprises at least one piece of information on disabling of a capability of the mobile terminal for communication via the packet-switched (PS) network, in particular information on disabling of evolved Radio Access Network (eRAN), in particular Evolved Universal Terrestrial Radio Access (E-UTRAN) / Long Term Evolution (LTE) capability. Preferably, the E-UTRAN/LTE capability is set to be disabled, if at least one MO-CS service is indicated as being permitted in the IE. As the UE may initiate the MO legacy CS service via the CS domain, additional attempts of the UE to connect to the PS domain via the eRAN are not necessary. By disabling this capability, the signalling of the UE via the eRAN and thereby the load on the eRAN can be minimized. The disabling may be performed at the UE temporarily for a certain time period. In particular, the disabling may be performed only for the duration of the usage of the MO-CS service. This time period during which the disabling is kept may be included in the IE or may be part of the processing unit of the UE.

According to a preferred embodiment, the instructions on usage of Mobile Originating circuit-switched (MO-CS) services (MO-CS services) are based on the availability of resources in the circuit-switched (CS) domain. By considering the availability of resources in the CS domain, the user experience can be further improved. In addition, rather than not allowing any MO-CS service in case of unavailability of the PS network, at least those MO-CS services for which sufficient resources are available in the CS domain may be permitted. Therefore at least part of the traffic, that would normally have to be borne by the PS network after the congestion has disappeared, can be offloaded to the CS domain.

According to one embodiment, the information element (IE) is stored and/or configured on the mobile terminal (UE). In the first case, the IE may be transmitted to the UE and in the second case, the IE will be configured by a different entity on the UE.

According to a preferred embodiment, the instructions on usage of Mobile Originating circuit-switched (MO-CS) services (MO-CS services) in the information element (IE) comprise instructions on permitting or not permitting usage of data, text, voice, and/or video services, in particular short message system (SMS), multimedia messaging service (MMS), Voice, Video, circuit-switched (CS) data call, and/or Unstructured Supplementary Service Data (USSD) services, in particular Wireless Application Protocol (WAP) browsing, prepaid callback service, mobile-money services, location-based content services and/or menu-based information services.

In the UE, a communication protocol is implemented that handles the communication towards the network in both domains, CS and PS. This protocol consists of a mobility management part that handles procedures like attach/detach and tracking area update and a session management part that handles procedures like requests and release of bearer resources. This part of the UE implementation is hereinafter referred to as handling unit. According to one embodiment, the mobile terminal (UE) comprises a handling unit for starting Mobile Originating circuit-switched (MO-CS) services and the handling unit has access to or contains the information element (IE) for using instructions from the information element (IE) when trying to start a Mobile Originating circuit-switched (MO-CS) service. Preferably, the handling unit checks on the availability of an IE before starting any MO-CS service. If an IE is available, the handling unit will first confirm with the entries of the IE whether the intended MO-CS service is permitted or not. The handling unit may also use information on disabling of a capability of the mobile terminal for communication via the packet-switched (PS) network contained in the IE. In particular, the handling unit may perform the disabling if a respective entry is included in the IE. Preferably, the disabling will only be performed by the handling unit after at least one MO-CS service, which is permitted according to the IE has been started.

The mobile terminal (UE) which is used in the present invention may be a mobile phone, a smartphone, a tablet PC, a laptop or a machine-to-machine (M2M) device.

The present invention relates to a method of handling communication in a communication network for communication via circuit-switched (CS) domain and packet-switched (PS) domain of the communication network. At least one information element (IE) is provided to the mobile terminal (UE), which comprises instructions on usage of Mobile Originating circuit-switched (MO-CS) services in case of unavailability of the packet-switched (PS) network and in that instructions from the information element (IE) are used when trying to start an Mobile Originating circuit-switched (MO-CS) service from the mobile terminal (UE) after detection of unavailability of the PS network. The method is characterized in that the information element (IE) is included in an Accept message from the mobility management entity (MME), namely an Attach Accept message or a Tracking Area Update message of the initial attach or tracking area update procedure of the UE at the packet switched (PS) network, and is stored at the mobile terminal (UE).

Features and advantages which are described with respect to the mobile terminal-as far as applicable - also relate to the method of the invention and vice versa. These features and advantages may thus only be described once.

The advantages of using instructions from the IE in case of unavailability of the PS network have already been described above with respect to the IE. As the instructions are only used after unavailability, in particular congestion of the PS network has been detected, the user experience can be further improved. In particular, normal usage of MO-CS services which are started by the UE will not be hindered.

According to the invention, the information element (IE) is stored at the mobile terminal (UE). The stored information element may be used upon receipt of information on unavailability, in particular congestion of the packet-switched (PS) network. This embodiment may be referred to as a static or preconfigured solution. One advantage of this embodiment is that even if the access to the eRAN, in particular the first node of the PS network, in particular the evolved node B (eNB) is rejected or cannot be established. As the IE is already stored on the UE, its content, in particular the instructions on usage of MO-CS services can be used by the UE and the appropriate service may be started.

According to an embodiment, the information element (IE) is transmitted to the mobile terminal (UE) together with information on unavailability, in particular congestion of the packet-switched (PS) network. This embodiment may also be referred to as a real-time or dynamic solution. One advantage of this embodiment is that the entries of the IE may be up to date with respect to current conditions, such as current availability of resources. In addition, only providing the IE to the UE when information on unavailability of the PS network is transmitted, reduces the amount of signalling as the IE will only be transmitted when needed.

According to one embodiment in both the static and the dynamic solution, the unavailability, in particular the congestion, of the packet-switched (PS) network is determined by the mobility management entity (MME) of the packet-switched (PS) network. The detection of the congestion by the MME is advantageous, as the UE trying to use the PS domain will try to access the MME. The MME on the other hand is connected to the other entities of the PS domain and is thus capable of providing status information, in particular congestion information of the other entities of the PS network as well.

The unavailability, in particular the congestion of the packet-switched (PS) network preferably comprises the unavailability, in particular congestion of the mobility management entity (MME), the unavailability, in particular congestion of the Home Subscriber Server (HSS) and/or the unavailability, in particular congestion of the Serving Gateway / PDN Gateway (S/PGW). As those congestions can be inquired or detected by the MME, the detection of unavailability of the PS network by the MME, as preferred, is reliable and respective information can be provided to the UE.

According to a preferred embodiment availability of resources of the circuit-switched (CS) domain is determined and the availability is used for generating and/or using the information element (IE). By determining the availability of resources of the CS domain, the instructions for usage of MO-CS services may be set according to the current conditions. If for example the resources of the CS domain are not sufficient for MMS services but would suffice for SMS services, the IE may include the instructions that MMS is not permitted but that SMS is permitted. In this example, the availability is used for generating the IE, in particular for generating the entries of the IE. The availability of resources may, however, in addition or alternatively be used when using the IE at the UE. In this case, if the IE for example permits MMS and SMS services but the determined availability of resources indicates that this service cannot be supported, a different service using fewer resources such as SMS services may be started from the UE.

According to a preferred embodiment, the availability of resources of the circuit-switched (CS) domain is determined by the mobility management entity (MME). This embodiment is advantageous, as the MME is preferably the entity of the PS network to communicate a congestion of the PS network to the UE. By determining the availability of resources of the CS domain at the MME, this information may thus be provided to the UE together with the information on unavailability of the PS network. In a preferred embodiment, the IE is generated at the MME and the information on resources of the CS domain is used when generating the IE.

In a preferred embodiment, the availability of resources of the circuit-switched (CS) domain is obtained from the mobile switching centre (MSC) of the circuit-switched (CS) domain. This obtaining of information can be preformed by querying the MSC from the MME via the SGs interface or via a Resource Management Entity (RME) which is connected to both the MME and the MSC. Such a query can be performed in pre-defined time intervals.

The information element (IE) may be provided to the mobile terminal (UE) by means of configuration. This embodiment may also be referred to as application layer solution. In this embodiment information from the MME on the desired behaviour of the UE in case of PS network congestion, in particular congestion of the eRAN or the PS core network, is provided to the UE for example by configuration by a server. This solution is in particular useful for UEs which are machine-to-machine (M2M) devices. The application layer solution is an alternative to the above mentioned static solution, where the IE is transmitted to the UE in an Accept message. In the application layer solution, the information which is to be used as the data in the IE is preferably provided to the server which will then configure the IE on the UE by the MME. In one embodiment, the server may be a DM server and in a different embodiment may be a LWM2M server. The core network is thus able to inform the UE via the application layer whether the MO-CS-Service is permitted and what kind of CS service is allowed.

In case of configuration via the DM server, the configuration may be performed in a DM session, which is requested by the DM server and is initiated by the UE. The IE which is configured in this session on the UE may also be referred to as a Management Object. This Management Object (IE) may be referred to as MO-CS-Service permitted. This IE includes two nodes. One Boolean node and one binary node. The first Boolean node with the possible values of 0 and 1 will define whether MO-CS-service is permitted. The second binary node will define the CS service type. This second binary node will therefore for example be coding the CS-service-types such as SMS, USSD, voice call, video calls, CS data.

In a further embodiment of the application layer solution the server which obtains the information from the MME and configures the IE on the UE may be an OMA Lightweight M2M server (LWM2M server). Also in this case, the UE is preferably an M2M device. The configuration is preformed similar to the embodiment of configuration via the DM Server. However, a DM session is not required for the configuration via the LWM2M server. The IE configured by the LWM2M server will include two resources. The first one is a Boolean resource with the possible values 0 and 1 and defines whether MO-CS-service is permitted. The second resource is a binary resource coding the CS-service-types, such as SMS, USSD, voice call, video calls, CS data.

According to one embodiment, the information element is transmitted to the mobile terminal (UE) from the mobility management entity (MME) directly or indirectly via an intermediate entity, in particular an evolved Node B (eNB) or device management (DM) server, lightweight machine-to-machine (LWM2M) server. The IE may be generated at the MME and subsequently transmitted to the UE. Alternatively, the transmission of the IE to the UE may comprise the transmission of information by means of configuration of the IE to the UE. The IE will therein be configured at the UE via the application layer.

According to one embodiment, the information element (IE) is included in a Reject Message from the mobility management entity (MME), preferably as a response to any initial layer 3 Non-Access-Stratum (NAS) messages sent by the UE, in particular in an Attach Reject message, a Tracking Area Update Reject message or a Service Reject message. The transmission of the IE in a Reject Message is in particular useful for the above mentioned dynamic solution, wherein the information element (IE) is transmitted to the mobile terminal (UE) together with information on unavailability, in particular congestion of the packet-switched (PS) network. In this case the information on unavailability, in particular congestion can be considered to be the Reject Message itself. Preferably, additional information such as time period for disabling and/or back-off timer can be included in the Reject Message.

According to the invention the information element (IE) is included in an Accept message from the mobility management entity (MME), in particular an Attach Accept message or a Tracking Area Update message. This method is in particular useful for the above mentioned static solution. When the UE first tries to Attach to the Network via for example an eNB, the IE can be transmitted to the UE within the Accept message and the IE can then be stored at the UE before a PS congestion happens and used when a PS congestion is detected by the UE.

According to a preferred embodiment, the mobile terminal (UE) accesses the packet switched (PS) domain via evolved Radio Access Network (eRAN), in particular Evolved Universal Terrestrial Radio Access (E-UTRAN), by sending a Request message to the mobility management entity (MME), the mobility management entity (MME) detects the congestion of any of the entities of the packet-switched (PS) network and in case of congestion of the PS network, the mobility management entity (MME) includes the information element into the Reject message to the mobile terminal (UE). If no congestion is detected by the MME and no other cause for rejection is present, the MME will send an Accept message to the UE. This Accept message will then not include the IE. If a cause for rejection different from unavailability, in particular congestion is present, the MME will send a Reject Message to the UE, which again will not include the IE of the present invention.

In a preferred embodiment of the method, the mobility management entity (MME) upon detection of congestion of at least one element of the packet-switched (PS) network determines the availability of the circuit-switched (CS) domain before sending the Reject Message to the mobile terminal (UE) and generates the instructions of the information element (IE) based on the availability of the circuit-switched (CS) domain.

In a different preferred embodiment, the mobile terminal (UE) accesses the packet switched (PS) domain via evolved Radio Access Network (eRAN), in particular Evolved Universal Terrestrial Radio Access (E-UTRAN) by sending an Attach, Tracking Area Update or Service request to the mobility management entity (MME), the mobility management entity (MME) transmits an Attach, Tracking Area Update or Service Accept message including an information element (IE) into the Accept message.

In a further embodiment, the mobile terminal (UE) stores the information element (IE) received from the mobility management entity (MME) and when trying to access the network via an evolved Radio Access Network (eRAN), in particular Evolved Universal Terrestrial Radio Access (E-UTRAN), specifically via an evolved Node B (eNB) and receiving a Reject message for the Radio Resource Control (RRC) connection, tries to initiate the requested Mobile Originated circuit-switched (MO-CS) services considering the instructions from the information element (IE).

According to a different embodiment, the mobility management entity (MME) provides information to an Device Management (DM) server or lightweight machine-to-machine (LWM2M) server on the desired behaviour of the mobile terminal (UE) in case of unavailability, in particular congestion of the packet-switched (PS) network. In addition or alternatively the Device Management (DM) server or lightweight machine-to-machine (LWM2M) server configures the information element (IE) on the mobile terminal (UE). In the case that the information on the desired behaviour of the mobile terminal (UE) in the case of unavailability, in particular congestion of the packet-switched (PS) network has been sent to the Device Management (DM) server or lightweight machine-to-machine (LWM2M) server, the configuration of the information element (IE) on mobile terminal (UE) by the Device Management (DM) server or lightweight machine-to-machine (LWM2M) server is carried out subsequent to the receipt of the information from the MME.

The invention will now be described again with reference to the enclosed figures, wherein:
Figure 1 shows a schematic view of the main entities of a communication network in which the UE and the method according to the present invention can be used;
Figure 2 shows a schematic view of the signal flow for dynamic solution of the method;
Figure 3 shows a schematic view of the signal flow for access reject by eRAN;
Figure 4 shows a schematic view of the signal flow for static solution of the method according to the invention;
Figure 5 shows actions taken by the UE in an embodiment of the method according to the dynamic solution;
Figure 6 shows actions taken by the UE in an embodiment of the method according to the static of the invention or application layer solution;
Figure 7 shows a schematic view of an Attach Reject message content;
Figure 8 shows a schematic view of a Tracking Area Update Reject message content;
Figure 9 shows a schematic view of a Service Reject message content;
Figure 10 shows a schematic view the Definition of an MO-CS-service-permitted information element according to the invention;
Figure 11 shows a schematic encoding scheme for an MO-CS-service-permitted information element according to the invention;
Figure 12 shows a schematic view of the signal flow for one embodiment of the application layer solution; and
Figure 13 shows a schematic view of the signal flow for another embodiment of the application layer solution.

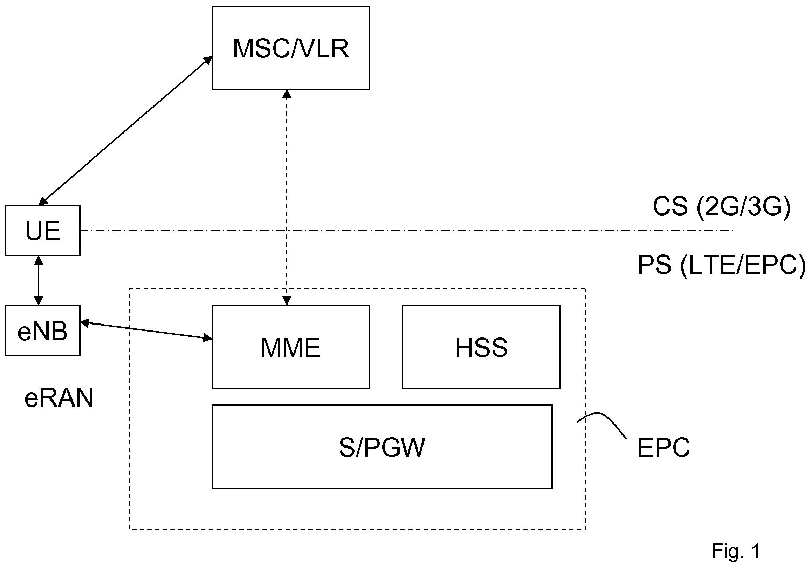

The communication network as depicted in figure 1 comprises a circuit-switched CS domain and a packet-switched PS domain. The layout of a 2G/3G communication network is well known, so that in figure 1 only the MSC/VLR is shown in figure 1 in the network for the CS domain. Also the layout of LTE/EPC networks is well known, so that in figure 1 only the MME, HSS and S/PGW of the network for the PS domain is shown. In addition to these entities of the Core Network also an eNB as part of an eRAN is shown in figure 1. The mobile terminal UE can communicate via the CS domain in the 2G/3G network as well as via the PS domain, in particular in the LTE/EPC network. It is obvious that further entities are present in the communication network. For sake of simplicity, however, only those entities which are of importance for the present invention are shown. Also for reasons of clarity only one mobile terminal UE is shown. The communication network will, however, in general comprise several mobile terminals.

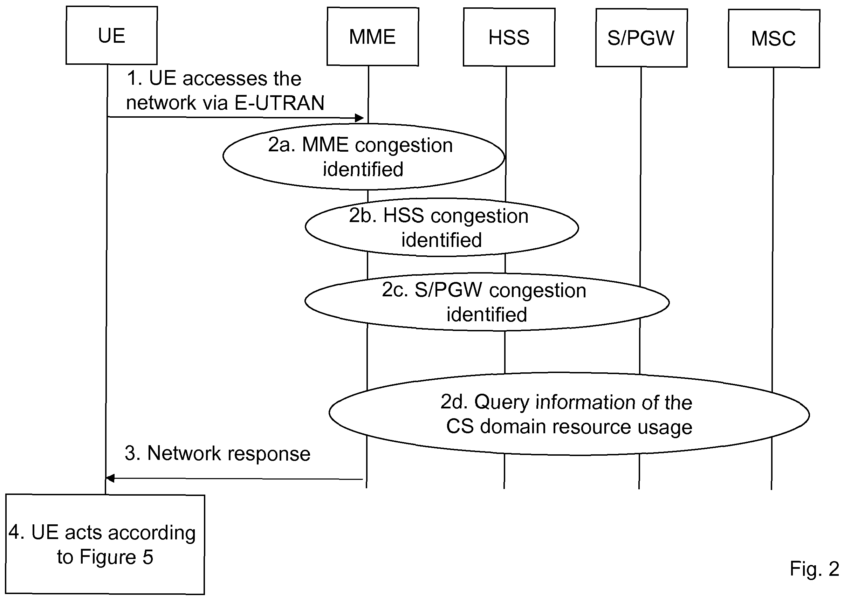

In Figure 2 the signal flow of one embodiment of the method is shown. The embodiment depicts the embodiment, which is also referred to as the dynamic solution. The following steps are carried out.
1. The UE accesses the network by sending the Attach Request, the Tracking Area Update Request or the Service Request message via the eRAN, in particular E-UTRAN.

The MME then determines whether the PS network is congested. In particular, one or all of steps 2a to 2c are carried out.
2a. the MME congestion is identified, or
2b. the HSS congestion is identified, or
2c. the S/PGW congestion is identified,

The identification of congestion by the MME can for example be established based on round trip delay time of a message sent to the one of the other entities (HSS, S/PGW) of the PS network. If a congestion is identified in any of steps 2a to 2c, the MME queries information on the CS domain resource usage, that means availability of the CS domain resources in step 2d.
2d. the MME queries the information of the CS domain resource usage.

For the query of step 2d the MME may communicate with the MSC via the SGs interface. This query may be performed in pre-defined time intervals. In order to support the query from the MME to the MSC and the provision of resource information from the MSC to the MME, the SGs interface as specified in the 3GPP specification TS 29.118 is amended accordingly.

As an alternative to querying the resource information from the MSC, the MME can also query another network resource entity, which holds information on the CS resources, in order to obtain the CS domain resource usage information.

It is also within the scope of the present invention, that the network operator can deploy a virtual network resource controller which contains the information of the resource usage of each relevant entity. And the MME can interrogate the controller in order to obtain the information.

In step 3 the network responds with the Attach Reject, the Tracking Area Update Reject or the Service Reject message including a back-off timer and an information element IE according to the present invention, which can also be referred to as MO-CS-Service-Permitted. The value of the IE is set dynamically based on the information obtained in steps 2a - 2d.

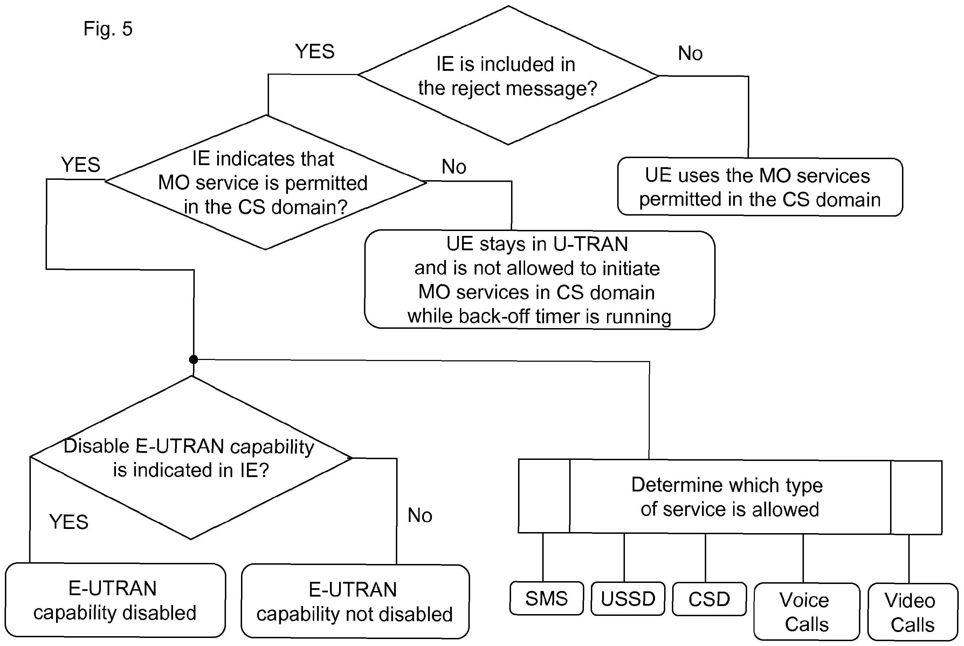

In step 4 the UE behaves as shown in Figure 5.

As shown in Figure 5, if no IE, in particular the MO-CS-Service-Permitted IE is included in the reject message from the MME, the UE will act according to general provisions by the CS domain. This ensures backward compatibility. If, however, the IE, in particular the MO-CS-Service-Permitted IE is included in the reject message, when trying to start an MO-CS-Service, the UE will check whether the IE indicates that MO-CS-services are permitted. If no MO-CS-services are not permitted, the UE stays in the eRAN, in particular the E-UTRAN and is not allowed to initiate MO services in the CS domain. The reject message will include a so called back-off timer, which sets the period within which the UE will not be allowed to attempt another access via the eRAN. If, however, the IE indicates, that MO-CS-services are permitted, the UE will check which type of MO-CS-service is allowed according to the IE. The respective service, if allowed will then be carried out. Examples of the MO-CS-services are SMS, USSD, CSD, Voice calls or Video calls.

In addition, if MO-CS-services are permitted according to the IE, the UE may check, whether eRAN, in particular E-UTRAN capabilities are to be disabled according to the IE. If the E-UTRAN capabilities are to be disabled, the UE may disable those capabilities. The disabling may be limited to the duration of usage of the MO-CS-service, which is performed according to the permissions of the IE.

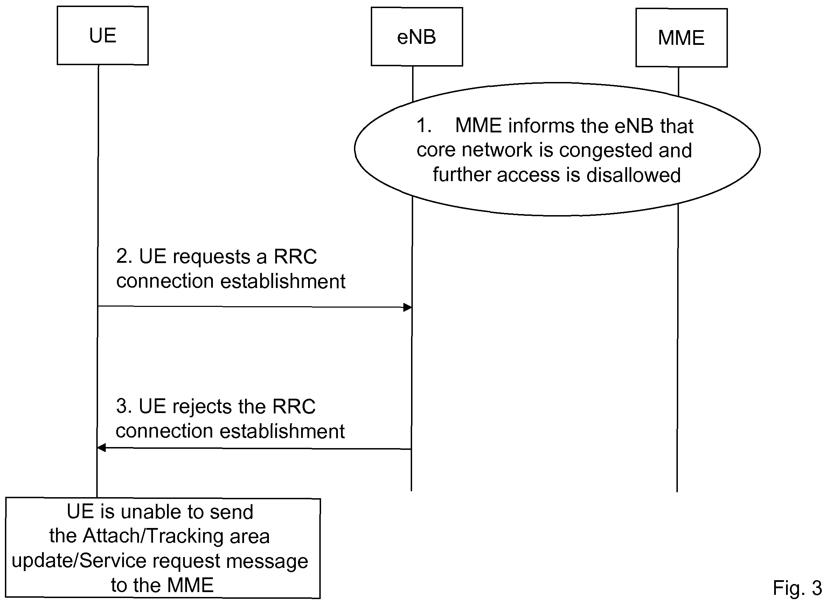

In Figure 3, the signal flow for access reject by eRAN is schematically shown. As can be derived from Figure 3, in cases, where the access to the PS network, in particular the PS core network is rejected, the MME will inform the eRAN, in particular the eNB that the core network is congested and further access is disallowed (step 1). If the UE attempts to access the PS network, i.e. requests a RRC connection establishment (step 2), the eNB will reject the RRC connection establishment (step 3). The UE will hence be unable to send the Attach / Tracking Area Update / Service request message to the MME (step 4). In that case, the dynamic solution as shown in Figure 2 cannot be used.

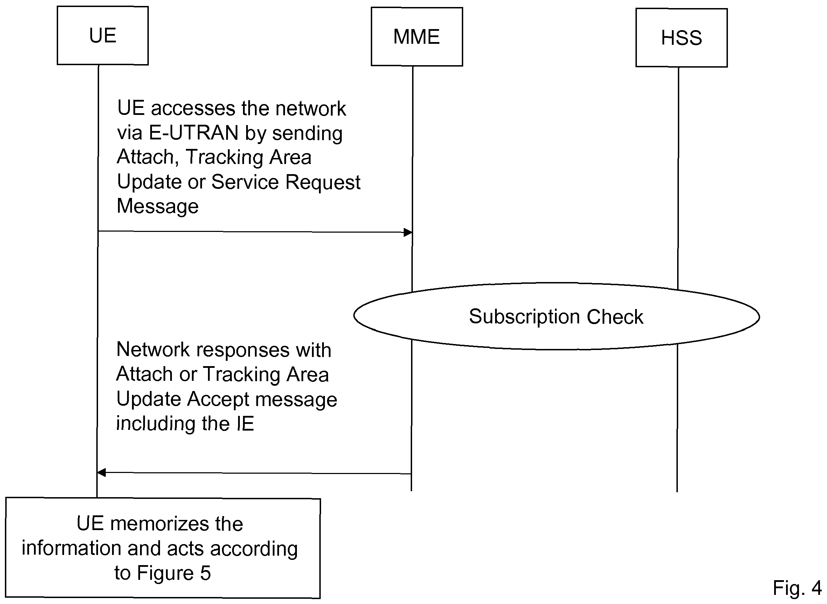

This case can, however, be addressed by an embodiment of the present invention, which may also be referred to as static solution. The schematic signal flow of this embodiment is shown in Figure 4. In this embodiment, the core network informs the UE whether the MO-CS-service is permitted and what kind of CS service is allowed in a static way. By static it is meant that the MME includes the MO-CS-service-permitted IE in the Attach accept or the Tracking Area Update accept message when the UE performs the initial attach or tracking area update procedure, i.e. the first time the UE contacts the LTE / EPC network.

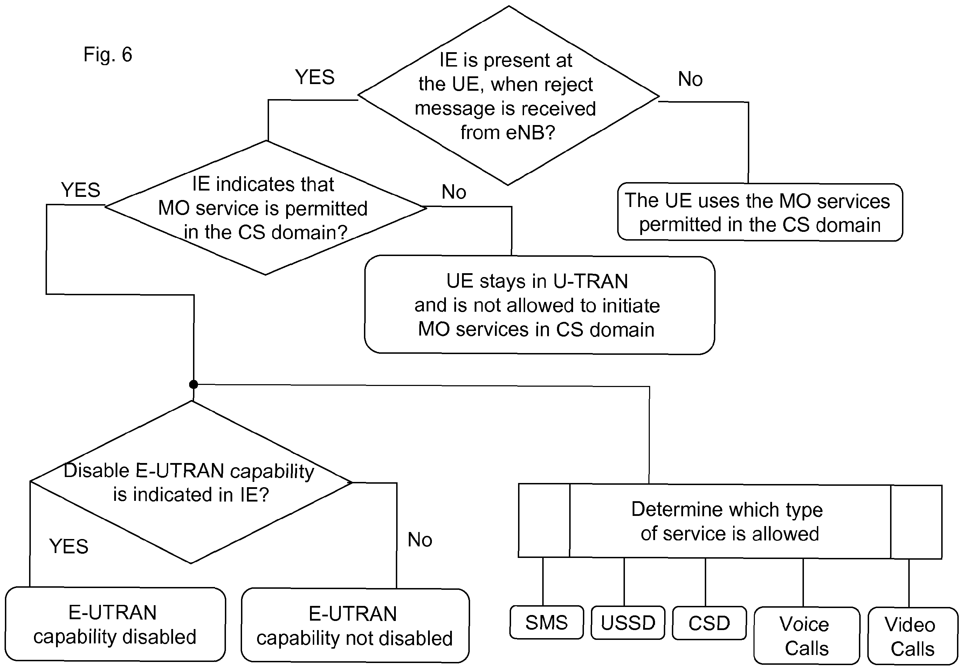

In this embodiment, the IE will be available, in particular stored at the UE and the UE will act according to Figure 6. These actions correspond to the actions depicted in Figure 5 with the exception, that when the Reject message is received from the eRAN, in particular the eNB, the UE will first check, whether an IE, in particular a MO-CS-Service-Permitted IE is present on the UE. If such an IE is present, the UE will check whether the IE indicates that MO-CS-services are permitted. If no MO-CS-services are not permitted, the UE stays in the eRAN, in particular the E-UTRAN and is not allowed to initiate MO services in the CS domain. If, however, the IE indicates, that MO-CS-services are permitted, the UE will check which type of MO-CS-service is allowed according to the IE. The respective service, if allowed, will then be carried out. Examples of the MO-CS-services are SMS, USSD, CSD, Voice calls or Video calls.

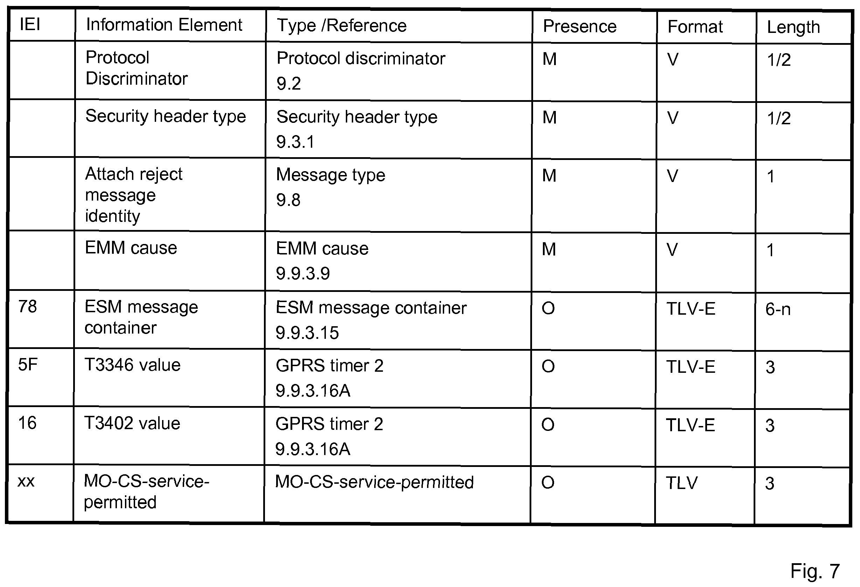

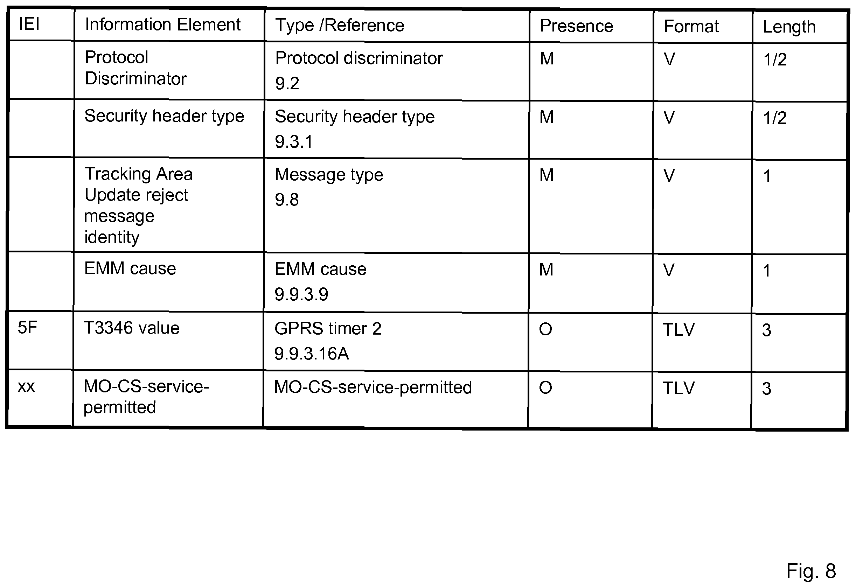

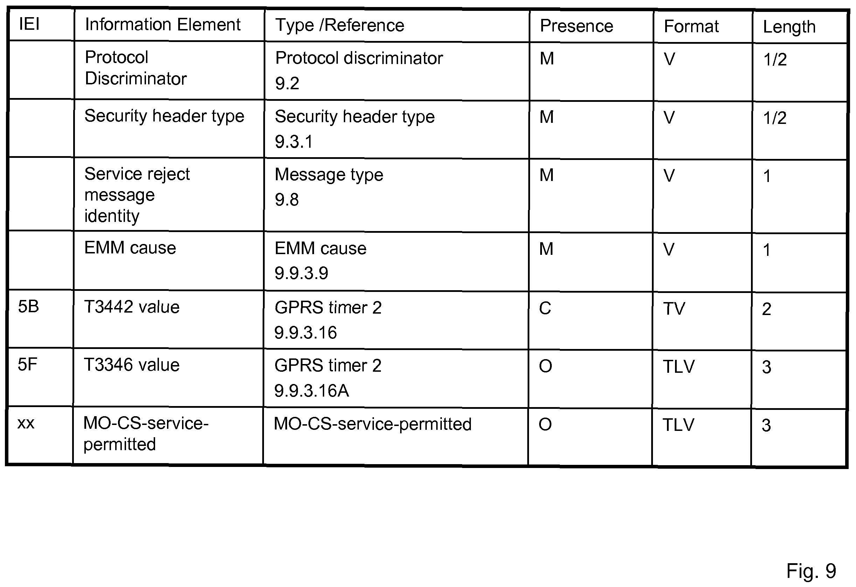

How the IE can be transmitted in an Attach Reject message is shown by in Figure 7, where the content of an Attach Reject message according to one embodiment is shown. Similarly, in Figures 8 and 9 the content of a Tracking Area Update Reject message and of a Service Reject message according to embodiments is shown. In the messages, the EMM cause indicates to the UE, why the Attach request, the Tracking Area Update request or the Service request have been rejected. In addition the IEI 5f in the messages represents a back-off timer, which is started when the respective request has been rejected due to congestion of the PS network.

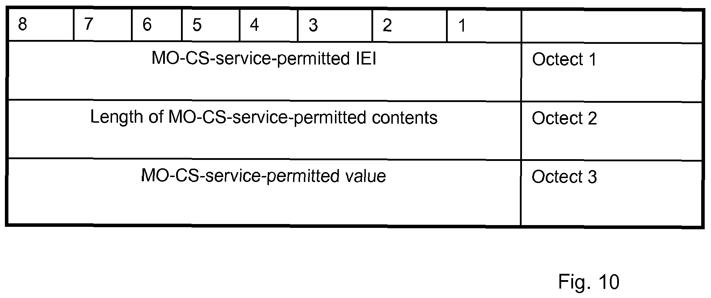

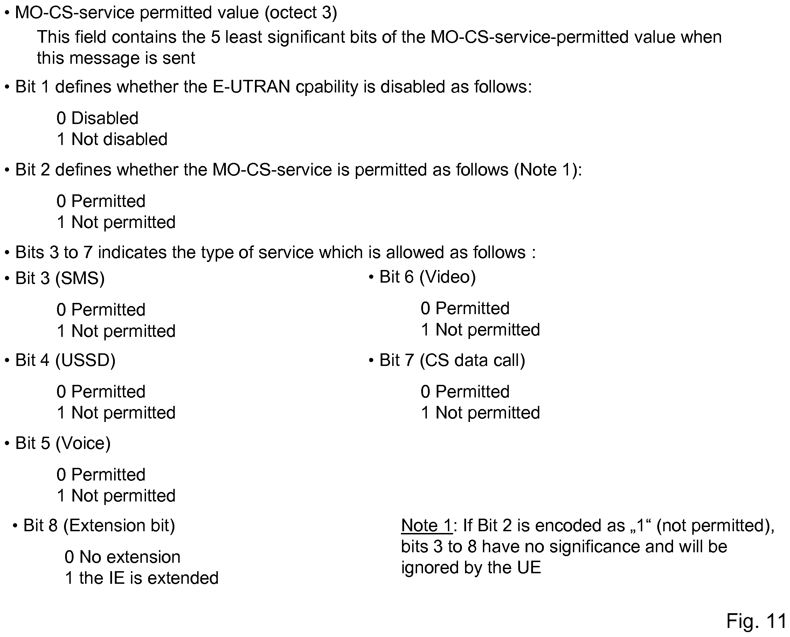

Figure 10 shows a schematic view the definition of an MO-CS-service-permitted information element according to the invention and Figure 11 shows a schematic encoding scheme for an MO-CS-service-permitted information element according to the invention. As can be derived from Figure 11, Bit 2 defines, whether the MO-CS-Service is permitted. If Bit 2 is encoded as 1, that means the service is not permitted, Bits 3 to 8 which relate to the individual MO-CS-services will be ignored by the UE.

As can be derived from Figures 2, 5 and 7 through 10, if in the embodiment of a dynamic solution the PS network, in particular the core network EPC is congested in the PS domain, the MME sends the ATTACH REJECT, the TRACKING AREA UPDATE REJECT and the SERVICE REJECT (3GPP TS24.301 subclauses 5.5.1, 5.5.3 and 5.6.1) including the PS domain back-off timer to back off the devices and the MME also includes a new Information Element (IE) indicating whether or not the mobile originating legacy CS services are allowed, and whether or not the device has to deactivate LTE/E-UTRAN capability when it initiates a legacy CS service as permitted.

In an alternative embodiment, the IE MO-CS-service-permitted may be transmitted to the UE via the application layer instead of in an accept or reject message. In this embodiment, which may also be referred to as an application layer solution, the UE is configured via device and service management mechanism.

The application layer solution is an alternative to the static solution described above. In particular, the application layer solution may preferably be used for machine-to-machine (M2M) devices.

In the application layer solution, the core network, in particular the MME is enabled to inform the UE via the application layer whether the MO-CS-Service is permitted and what kind of CS service is allowed.

Two examples of the application layer solution are configuration via OMA device mananger (DM) and configuration via OMA Lightweight M2M (LWM2M).

In the embodiment of configuration via OMA DM, the configuration information, whether MO-CS-service is permitted and what kind of service is allowed, is provided from the MME to the OMA DM server via the MME - OMA DM Server interface. The OMA DM Server is provided with the necessary functionality for receiving and handling this information. In particular the OMA DM server is provided with a functionality of supporting an Information Element, which in this embodiment may also be referred to as Management Object (MaOb). The Management Object will normally be referred to as MO. In order to avoid confusion with the mobile originating services, the Management Object will be referred to as MaOb in this description. The IE or MaOb of this embodiment includes two nodes.

The first node defines whether MO-CS services are permitted. This node is a Bolean node with the possible values 0 and 1. The second node defines the CS service type. This second node is preferably a binary node coding the CS-service-types, such as SMS, USSD, voice call, video calls, CS data.

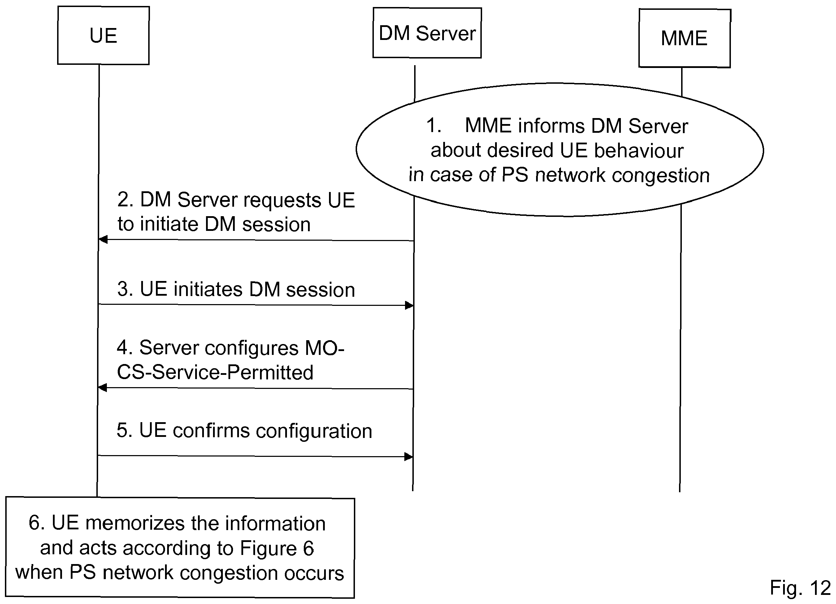

The OMA DM server can create such an IE (MaOb) on the mobile terminal (UE), for example an M2M device by OMA DM operations. The UE supports the IE in its data structure and supports a mechanism to control UE behaviour, that means device behaviour, according to the IE (MaOb) data. The OMA DM server is able to update the information any time needed. Any change to the IE (MaOb) triggers the UE, in particular the M2M device, to change its behaviour accordingly. Figure 12 shows the signal flow for providing the IE (MaOb) on a UE via configuration from a DM Server. In a first step, the MME informs the DM Server about desired UE behaviour in case of PS network congestion (step 1). The DM Server then requests the UE to initiate a DM session (step 2), which is then initiated by the UE (step 3). In this DM session, the DM Server configures the IE MO-CS-service-permitted on the UE according to the information obtained from the MME (step 4). The UE confirms the configuration (step 5). The UE memorizes the IE and acts according to Figure 6, when congestion of the PS network, in particular the eRAN or the PS core network occurs (step 6).

In the second embodiment of the application layer solution, the IE is configuration via OMA "Lightweight M2M". OMA "Lightweight M2M", which is also referred to as LWM2M is a new evolving standard for device and service management of M2M devices / modules.

Via the MME- OMA LWM2M server interface, the configuration information, whether the MO-CS-service is permitted and what kind of CS service are allowed, is provided to the OMA "Lightweight M2M" Server. The OMA LWM2M server supports the functionality of receiving and handling this information. In particular the OMA LWM2M Server supports the IE, which can also be referred to as OMA "Lightweight M2M" Object "MO-CS-Service-Permitted". This IE or MaOb includes two resources. The first resource is preferably a Boolean resource defining whether MO-CS-service is permitted. This Boolean resource has possible values 0 and 1. The second resource defines the CS service type. This second resource is a binary resource coding the CS-service-types, such as SMS, USSD, voice calls, video calls, CS data.

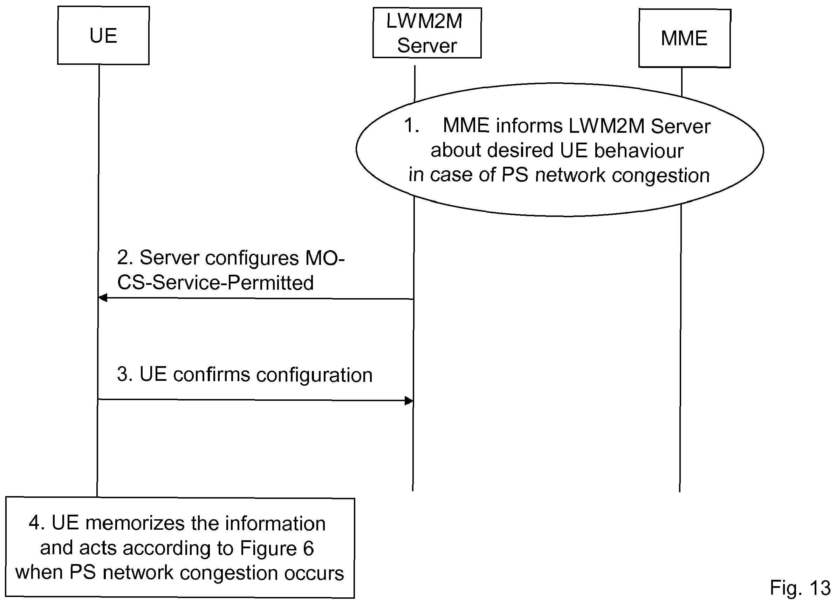

The OMA LWM2M server can create such an IE, in particular LWM2M Management Object, on the UE, for example an M2M device by OMA LWM2M operations. For this purpose, the device has an implementation, which enables it to support the IE (LWM2M object) inside its data structure and supports a mechanism to control UE behaviour, that means device behaviour, according to the IE (LWM2M object) data. The OMA LWM2M server is able to update the information any time needed. Any change to the IE (LWM2M object) triggers the device to change its behaviour accordingly. Figure 13 shows the signal flow for providing the IE (LWM2M object) on a UE via configuration from a LWM2M Server. In a first step, the MME informs the LWM2M Server about desired UE behaviour in case of PS network congestion (step 1). The LWM2M Server then configures the IE MO-CS-service-permitted on the UE according to the information obtained from the MME (step 2). The UE confirms the configuration (step 3). The UE memorizes the IE and acts according to Figure 6, when congestion of the PS network, in particular the eRAN or the PS core network occurs (step 4).

With the present invention a network-controlled method containing a dynamic and a static solution is provided, based on the actual congestion situation in the PS domain and the resource usage in the CS domain. The present invention conducts the devices as to whether or not they are permitted to access the CS domain for initiating Mobile originating CS services, while they are getting backed off by the PS network. One benefit of the present invention is that a "domino-effect" can be avoided and in the meantime a certain number of devices, e.g. smartphones can still be provided with the legacy CS domain services. In the static solution the IE may be provided to the UE in a message from the MME, for example via an eNB or by configuration, for example by an OMA DM or LWM2M server.

It may be provided that a combination of both the static and dynamic solutions is implemented. In this case, the IE MO-CS-service-permitted will be transmitted to the UE upon first attachment to the network, in particular the MME and the IE or an updated IE will be transmitted to the UE in a reject message in case of congestion of the PS network.

## Claims

1. Method of handling communication from a mobile terminal (UE) in a communication network for communication via circuit-switched (CS) domain and packet-switched (PS) domain of the communication network, wherein at least one information element (IE) is provided to the mobile terminal (UE), which comprises instructions on usage of Mobile Originating circuit-switched (MO-CS) services in case of unavailability of the packet-switched (PS) network and in that instructions from the information element (IE) are used when trying to start an Mobile Originating circuit-switched (MO-CS) service from the mobile terminal (UE) after detection of unavailability of the PS network, **characterized in that** the information element (IE) is included in an Accept message from the mobility management entity (MME), namely in an Attach Accept message or a Tracking Area Update message of the initial attach or tracking area update procedure of the UE at the packet switched (PS) network, is transmitted to the mobile terminal (UE) and is stored at the mobile terminal (UE).

2. Method according to claim 1, **characterized in that** the information element (IE) is stored at the mobile terminal (UE) and is used upon receipt of information on unavailability, in particular congestion of the packet-switched (PS) network and/or **in that** the information element (IE) is transmitted to the mobile terminal (UE) together with information on unavailability, in particular congestion of the packet-switched (PS) network.

3. Method according to claim 1 or 2, **characterized in that** the unavailability, in particular the congestion, of the packet-switched (PS) network is determined by the mobility management entity (MME) of the packet-switched (PS) network.

4. Method according to anyone of claims 1 to 3, **characterized in that** the unavailability, in particular the congestion of the packet-switched (PS) network comprises the unavailability, in particular congestion of the mobility management entity (MME), the unavailability, in particular congestion of the Home Subscriber Server (HSS) and/or the unavailability, in particular congestion of the Serving Gateway / PDN Gateway (S/PGW).

5. Method according to anyone of claims 1 to 4, **characterized in that** availability of resources of the circuit-switched (CS) domain is determined and the availability is used for generating and/or using the information element (IE) and preferably **in that** the availability of resources of the circuit-switched (CS) domain is determined by the mobility management entity (MME) and is preferably obtained from the mobile switching centre (MSC) of the circuit-switched (CS) domain.

6. Method according to anyone of claims 1 to 5, **characterized in that** the information element (IE) is provided to the mobile terminal (UE) by means of configuration.

7. Method according to anyone of claims 1 to 6, **characterized in that** the information element is transmitted to the mobile terminal (UE) from the mobility management entity (MME) directly or indirectly via an intermediate entity, in particular an evolved Node B (eNB) or device management (DM) server, light weight machine-to-machine (LWM2M) server.

8. Method according to anyone of claims 1 to 7, **characterized in that** the mobile terminal (UE) accesses the packet switched (PS) domain via evolved Radio Access Network (eRAN), in particular Evolved Universal Terrestrial Radio Access (E-UTRAN) by sending an Attach, Tracking Area Update or Service request to the mobility management entity (MME), the mobility management entity (MME) transmits an Attach, Tracking Area Update or Service Accept message including an information element (IE) into the Accept message.

9. Method according to claim 8, **characterized in that** the mobile terminal (UE) stores the information element (IE) received from the mobility management entity (MME) and when trying to access the network via an evolved Radio Access Network (eRAN), in particular Evolved Universal Terrestrial Radio Access (E-UTRAN), specifically via an evolved Node B (eNB) and receiving a Reject message for the Radio Resource Control (RRC) connection, tries to initiate the requested Mobile Originated circuit-switched (MO-CS) services considering the instructions from the information element (IE).

10. Method according to anyone of claims 1 to 9, **characterized in that** the mobility management entity (MME) provides information to an Device Management (DM) server or lightweight machine-to-machine (LWM2M) server on the desired behaviour of the mobile terminal (UE) in case of unavailability, in particular congestion of the packet-switched (PS) network and the Device Management (DM) server or light weight machine-to-machine (LWM2M) server subsequently configures the information element (IE) on the mobile terminal (UE).

11. Method according to anyone of claims 1 to 10, **characterized in that** the instructions are permitting to use or not permitting to use at least one Mobile Originating circuit-switched (MO-CS) service.

12. Method according to anyone of claims 1 to 11, **characterized in that** the information element (IE) comprises at least one piece of information on disabling of a capability of the mobile terminal for communication via the packet-switched (PS) network, in particular information on disabling of evolved Radio Access Network (eRAN), in particular Evolved Universal Terrestrial Radio Access (E-UTRAN) / Long Term Evolution (LTE) capability.

13. Method according to anyone of claims 1 to 12, **characterized in that** the instructions on usage of Mobile Originating circuit-switched (MO-CS) services (MO-CS services) are based on the availability of resources in the circuit-switched (CS) domain.

14. Method according to anyone of claims 1 to 13, **characterized in that** the instructions in the information element (IE) comprise instructions on permitting or not permitting usage of data, text, voice, and/or video services, in particular short message system (SMS), multimedia messaging service (MMS), Voice, Video, circuit-switched (CS) data call, and/or Unstructured Supplementary Service Data (USSD) services, in particular Wireless Application Protocol (WAP) browsing, prepaid callback service.

## Patentansprüche

1. Verfahren zur Abwicklung der Kommunikation von einem mobilen Endgerät (UE) in einem Kommunikationsnetz zur Kommunikation über eine leitungsvermittelte (CS) Domäne und eine paketvermittelte Domäne (PS) des Kommunikationsnetzes, wobei dem mobilen Endgerät (UE) mindestens ein Informationselement (IE) bereitgestellt ist, das Anweisungen zur Verwendung von mobil begründeten leitungsvermittelten Diensten (MO-CS) im Falle der Nichtverfügbarkeit des paketvermittelten Netzes (PS) aufweist und dass Instruktionen von dem Informationselement (IE) verwendet werden, wenn versucht wird, einen mobil begründeten leitungsvermittelten Dienst (MO-CS) vom mobilen Endgerät (UE) aus zu starten, nachdem eine Nichtverfügbarkeit des PS-Netzes erkannt wurde, **dadurch gekennzeichnet, dass** das Informationselement (IE) in einer Accept-Nachricht von der Mobilitätsverwaltungseinheit (MME) eingefügt wird, nämlich in einer Attach-Accept-Nachricht oder einer Tracking-Area-Aktualisierungs-Nachricht der anfänglichen Attach- oder Tracking-Area-Aktualisierungs-Prozedur des UE bei dem paketvermittelten Netz (PS), zu dem mobilen Endgerät (UE) übertragen wird und in dem mobilen Endgerät (UE) gespeichert wird.

2. Verfahren nach Anspruch 1, **dadurch gekennzeichnet, dass** das Informationselement (IE) im mobilen Endgerät (UE) gespeichert wird und bei Erhalt von Informationen über die Nichtverfügbarkeit, insbesondere Überlastung des paketvermittelten (PS) Netzes verwendet wird und/oder dass das Informationselement (IE) zusammen mit Informationen über die Nichtverfügbarkeit, insbesondere Überlastung des paketvermittelten (PS) Netzes, an das mobile Endgerät (UE) übertragen wird.

3. Verfahren nach Anspruch 1 oder 2, **dadurch gekennzeichnet, dass** die Nichtverfügbarkeit, insbesondere die Überlastung des paketvermittelten (PS) Netzes von der Mobilitätsverwaltungseinheit (MME) des paketvermittelten (PS) Netzes bestimmt wird.

4. Verfahren nach einem der Ansprüche 1 bis 3, **dadurch gekennzeichnet, dass** die Nichtverfügbarkeit, insbesondere die Überlastung des paketvermittelten (PS) Netzes, die Nichtverfügbarkeit, insbesondere Überlastung der Mobilitätsverwaltungseinheit (MME), die Nichtverfügbarkeit, insbesondere Überlastung des Home-Subscriber-Servers (HSS) und/oder die Nichtverfügbarkeit, insbesondere Überlastung des Serving-Gateways / PDN Gateways (S / PGW), umfasst.

5. Verfahren nach einem der Ansprüche 1 bis 4, **dadurch gekennzeichnet, dass** die Verfügbarkeit von Ressourcen der leitungsvermittelten Domäne (CS) bestimmt wird und die Verfügbarkeit zum Erzeugen und/oder Verwenden des Informationselements (IE) verwendet wird, und vorzugsweise, dass die Verfügbarkeit von Ressourcen der leitungsvermittelten (CS) Domäne von der Mobilitätsmanagementeinheit (MME) bestimmt wird und vorzugsweise von der Mobilvermittlungsstelle (MSC) der leitungsvermittelten Domäne (CS) erhalten wird.

6. Verfahren nach einem der Ansprüche 1 bis 5, **dadurch gekennzeichnet, dass** das Informationselement (IE) dem mobilen Endgerät (UE) mittels einer Konfiguration bereitgestellt wird.

7. Verfahren nach einem der Ansprüche 1 bis 6, **dadurch gekennzeichnet, dass** das Informationselement von der Mobilitätsmanagementeinheit (MME) direkt oder indirekt über eine Zwischenentität, insbesondere einen entwickelten Knoten B (eNB), an das mobile Endgerät (UE) oder Geräte-Management (DM)-Server, Light-Weight-Maschine-zu-Maschine (LWM2M)-Server, zu dem mobilen Endgerät (UE) übertragen wird.

8. Verfahren nach einem der Ansprüche 1 bis 7, **dadurch gekennzeichnet, dass** das mobile Endgerät (UE) auf die paketvermittelte Domäne (PS) über ein entwickeltes Funkzugangsnetz (eRAN), insbesondere einen entwickelten universellen terrestrischen Funkzugriff (E-UTRAN), zugreift, durch Senden einer Attach-, Tracking-Area-Aktualisierungs- oder Service-Anforderung an die Mobilitätsmanagementeinheit (MME), die Mobilitätsmanagementeinheit (MME) überträgt eine Attach-, Tracking-Area-Aktualisierungs- oder -Service-Accept-Nachricht umfassend ein Informationselement (IE) in die Accept-Nachricht.

9. Verfahren nach Anspruch 8, **dadurch gekennzeichnet, dass** das mobile Endgerät (UE) das von der Mobilitätsmanagementeinheit (MME) empfangene Informationselement (IE) speichert, und, wenn es versucht, auf das Netz über ein entwickeltes Funkzugangsnetzwerk (eRAN), insbesondere einen entwickelten universellen terrestrischen Funkzugriff (E-UTRAN), insbesondere über einen entwickelten Knoten B (eNB), zuzugreifen und eine Ablehnungsnachricht für die Funkresourcenkontrolle (RCC)-Verbindung erhält, versucht, unter Berücksichtigung der Instruktionen von dem Informationselement (IE) die angeforderten mobil begründeten leitungsvermittelten (MO-CS) Dienste zu initiieren.

10. Verfahren nach einem der Ansprüche 1 bis 9, **dadurch gekennzeichnet, dass** die Mobilitätsmanagementeinheit (MME) einem Geräte-Management (DM)-Server oder Light-Weight-Maschine-zu-Maschine (LWM2M)-Server Informationen bereitstellt über das gewünschte Verhalten des mobilen Endgeräts (UE) im Falle der Nichtverfügbarkeit, insbesondere Überlastung des paketvermittelten (PS) Netzes, und der Geräte-Management (DM)-Server oder Light-Weight-Maschine-zu-Maschine (LWM2M)-Server anschließend das Informationselement (IE) auf dem mobilen Endgerät (UE) konfiguriert.

11. Verfahren nach einem der Ansprüche 1 bis 10, **dadurch gekennzeichnet, dass** die Anweisungen die Verwendung von mindestens einem mobil begründeten leitungsvermittelten (MO-CS) Dienst erlauben oder nicht erlauben.

12. Verfahren nach einem der Ansprüche 1 bis 11, **dadurch gekennzeichnet, dass** das Informationselement (IE) mindestens eine Information zum Deaktivieren einer Fähigkeit des mobilen Endgerätes zur Kommunikation über das paketvermittelte (PS) Netz aufweist, insbesondere Informationen zur Deaktivierung des entwickelten Funkzugangsnetzes (eRAN), insbesondere des entwickelten universellen terrestrischen Funkzugangs (E-UTRAN) / Long Term Evolution (LTE) Fähigkeit.

13. Verfahren nach einem der Ansprüche 1 bis 12, **dadurch gekennzeichnet, dass** die Anweisungen zur Verwendung von mobil begründeten leitungsvermittelten (MO-CS) Diensten (MO-CS Diensten) auf der Verfügbarkeit von Ressourcen in der leitungsvermittelten (CS) Domäne basieren.

14. Verfahren nach einem der Ansprüche 1 bis 13, **dadurch gekennzeichnet, dass** die Anweisungen in dem Informationselement (IE) aufweisen Anweisungen zum Zulassen oder Nichtzulassen der Nutzung von Daten-, Text-, Sprach- und / oder Videodiensten, insbesondere eines Kurznachrichtensystems (SMS), Multimedia-Mitteilungsdienst (MMS), Sprache, Video, leitungsvermittelter (CS) -Datenanruf und/oder Unstructured Supplementary Service Data (USSD) Diensten, insbesondere Wireless Application Protocol WAP) Browsing, vorausbezahlter Rückrufdienst.

## Revendications

1. Procédé de gestion de communication à partir d'un terminal mobile (UE) dans un réseau de communication pour une communication via un domaine à commutation de circuit (CS) et d'un domaine à commutation de paquets (PS) du réseau de communication, dans lequel au moins un élément d'informations (IE) est fourni au terminal mobile (UE), qui comprend des instructions sur une utilisation de services à commutation de circuit en provenance d'un mobile (MO-CS) en cas de non-disponibilité du réseau à commutation de paquets (PS) et en ce que des instructions provenant de l'élément d'informations (IE) sont utilisées lors d'un essai de démarrage d'un service à commutation de circuit en provenance d'un mobile (MO-CS) à partir du terminal mobile (UE) après une détection d'une non-disponibilité du réseau PS, **caractérisé en ce que** l'élément d'informations (IE) est inclus dans un message d'acceptation à partir de l'entité de gestion de mobilité (MME), à savoir un message d'acceptation de rattachement ou un message de mise à jour de zone de suivi de la procédure initiale de rattachement ou de mise à jour de zone de suivi de l'UE au niveau du réseau à commutation de paquets (PS), est transmis au terminal mobile (UE) et est stocké au niveau du terminal mobile (UE).

2. Procédé selon la revendication 1, **caractérisé en ce que** l'élément d'informations (IE) est stocké au niveau du terminal mobile (UE) et est utilisé lors d'une réception d'informations sur une non-disponibilité, en particulier une congestion du réseau à commutation de paquets (PS) et/ou **en ce que** l'élément d'informations (IE) est transmis au terminal mobile (UE) conjointement avec des informations sur une non-disponibilité, en particulier une congestion du réseau à commutation de paquets (PS).

3. Procédé selon la revendication 1 ou 2, **caractérisé en ce que** la non-disponibilité, en particulier la congestion, du réseau à commutation de paquets (PS) est déterminée par l'entité de gestion de mobilité (MME) du réseau à commutation de paquets (PS).

4. Procédé selon l'une quelconque des revendications 1 à 3, **caractérisé en ce que** la non-disponibilité, en particulier la congestion du réseau à commutation de paquets (PS) comprend la non-disponibilité, en particulier une congestion de l'entité de gestion de mobilité (MME), la non-disponibilité, en particulier une congestion du serveur d'abonné domestique (HSS) et/ou la non-disponibilité, en particulier une congestion de la passerelle de desserte/passerelle PDN (S/PGW).

5. Procédé selon l'une quelconque des revendications 1 à 4, **caractérisé en ce qu'**une disponibilité de ressources du domaine à commutation de circuit (CS) est déterminée et la disponibilité est utilisée pour générer et/ou utiliser l'élément d'informations (IE) et de préférence **en ce que** la disponibilité de ressources du domaine à commutation de circuit (CS) est déterminée par l'entité de gestion de mobilité (MME) et est de préférence obtenue à partir du centre de commutation mobile (MSC) du domaine à commutation de circuit (CS).

6. Procédé selon l'une quelconque des revendications 1 à 5, **caractérisé en ce que** l'élément d'informations (IE) est fourni au terminal mobile (UE) au moyen d'une configuration.

7. Procédé selon l'une quelconque des revendications 1 à 6, **caractérisé en ce que** l'élément d'informations est transmis au terminal mobile (UE) à partir de l'entité de gestion de mobilité (MME) directement ou indirectement via une entité intermédiaire, en particulier un noeud B évolué (eNB) ou un serveur de gestion de dispositif (DM), un serveur machine à machine léger (LWM2M).

8. Procédé selon l'une quelconque des revendications 1 à 7, **caractérisé en ce que** le terminal mobile (UE) accède au domaine à commutation de paquets (PS) via un réseau d'accès radio évolué (eRAN), en particulier un accès radio terrestre universel évolué (E-UTRAN) en envoyant une demande de rattachement, de mise à jour de zone de suivi ou de service à l'entité de gestion de mobilité (MME), l'entité de gestion de mobilité (MME) transmet un message d'acceptation de rattachement, de mise à jour de zone de suivi ou de service incluant un élément d'informations (IE) dans le message d'acceptation.

9. Procédé selon la revendication 8, **caractérisé en ce que** le terminal mobile (UE) stocke l'élément d'informations (IE) reçu à partir de l'entité de gestion de mobilité (MME) et lors d'un essai d'accès au réseau via un réseau d'accès radio évolué (eRAN), en particulier un accès radio terrestre universel évolué (E-UTRAN), spécifiquement via un noeud B évolué (eNB) et recevant un message de rejet pour la connexion de commande de ressource radio (RRC), essaye d'initier les services à commutation de circuit en provenance d'un mobile (MO-CS) demandés en considérant les instructions provenant de l'élément d'informations (IE).

10. Procédé selon l'une quelconque des revendications 1 à 9, **caractérisé en ce que** l'entité de gestion de mobilité (MME) fournit des informations à un serveur de gestion de dispositif (DM) ou un serveur machine à machine léger (LWM2M) sur le comportement souhaité du terminal mobile (UE) en cas de non-disponibilité, en particulier une congestion du réseau à commutation de paquets (PS) et le serveur de gestion de dispositif (DM) ou un serveur machine à machine léger (LWM2M) configure ensuite l'élément d'informations (IE) sur le terminal mobile (UE).

11. Procédé selon l'une quelconque des revendications 1 à 10, **caractérisé en ce que** les instructions permettent d'utiliser ou interdisent d'utiliser au moins un service à commutation de circuit en provenance d'un mobile (MO-CS).

12. Procédé selon l'une quelconque des revendications 1 à 11, **caractérisé en ce que** l'élément d'informations (IE) comprend au moins une information sur une désactivation d'une capacité du terminal mobile à communiquer via le réseau à commutation de paquets (PS), en particulier une information sur une désactivation d'un réseau d'accès radio évolué (eRAN), en particulier une capacité d'accès radio terrestre universel évolué (E-UTRAN)/d'évolution à long terme (LTE) .

13. Procédé selon l'une quelconque des revendications 1 à 12, **caractérisé en ce que** les instructions sur une utilisation de services à commutation de circuit en provenance d'un mobile (MO-CS) (services MO-CS) sont basées sur la disponibilité de ressources dans le domaine à commutation de circuit (CS) .

14. Procédé selon l'une quelconque des revendications 1 à 13, **caractérisé en ce que** les instructions dans l'élément d'informations (IE) comprennent des instructions sur une permission ou une interdiction d'utilisation de services de données, textuels, vocaux, et/ou vidéo, en particulier des services de système de message court (SMS), de service de messagerie multimédia (MMS), vocaux, vidéo, d'appel de données à commutation de circuit (CS), et/ou des services de données de service supplémentaires non structurées (USSD), en particulier une navigation de protocole d'application sans fil (WAP), un service de rappel prépayé.
